# EUROPEAN PATENT APPLICATION

(11) **EP 0 670 234 A1**
(43) Date of publication of application: **06.09.1995**
(21) Application number: 94102837.5
(22) Date of filing: 24.02.1994
(51) Int. Cl.: B60K 17/08, F16D 23/04, E02F 9/20

(54) **Speed change gear device for wheeled excavator**

(71) Applicant: SAMSUNG HEAVY INDUSTRY CO., LTD, Changwon-Shi, Kyung Nam (KR)
(72) Inventor: Lee, Jang-Kuk, Changwon-Shi, Kyung Nam (KR)
(74) Representative: Bockhorni, Josef, Dipl.-Ing.

(57) **Abstract**

The power interruption clutch (2) stops the power transmission from the motor (7) to a driving shaft (8) and has a plurality of clutch plates (4,4') and an apply piston (5). The apply piston makes the clutch plates be engaged with or disengaged from each other in accordance with a stepping motion of a clutch pedal. The synchro mesh gear (3) changes the running speed in at least two speed changing stages and carries out the speed change only when the change gears are equalized to the driving shaft in their circumferential velocities. The synchro mesh gear (3) has a pair of clutch gears (12,12') mounted on the driving shaft (8), a sleeve gear (9) placed between the clutch gears, a pair of synchro cones (13,13') respectively formed on facing surfaces of the clutch gears, and a synchronizer ring (15) mounted about a hub of the sleeve gear and coming into contact with the synchro cones (13,13') when a speed changing operation is carried out. The gear device not only achieves a desired speed changing operation while continuing the running of the excavator but also makes the excavator run at the changed speed immediately.

## Description

### BACKGROUND OF THE INVENTION

### Field of the Invention

The present invention relates in general to a speed change gear device for a wheeled excavator, and more particularly, to a speed change gear device for a wheeled excavator carrying out its speed changing operation even while the excavator is running.

### Description of the Prior Art

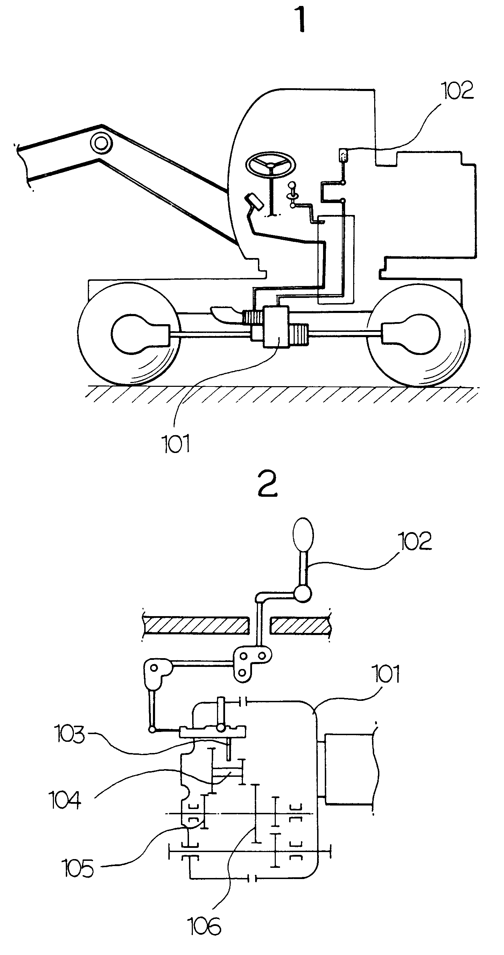

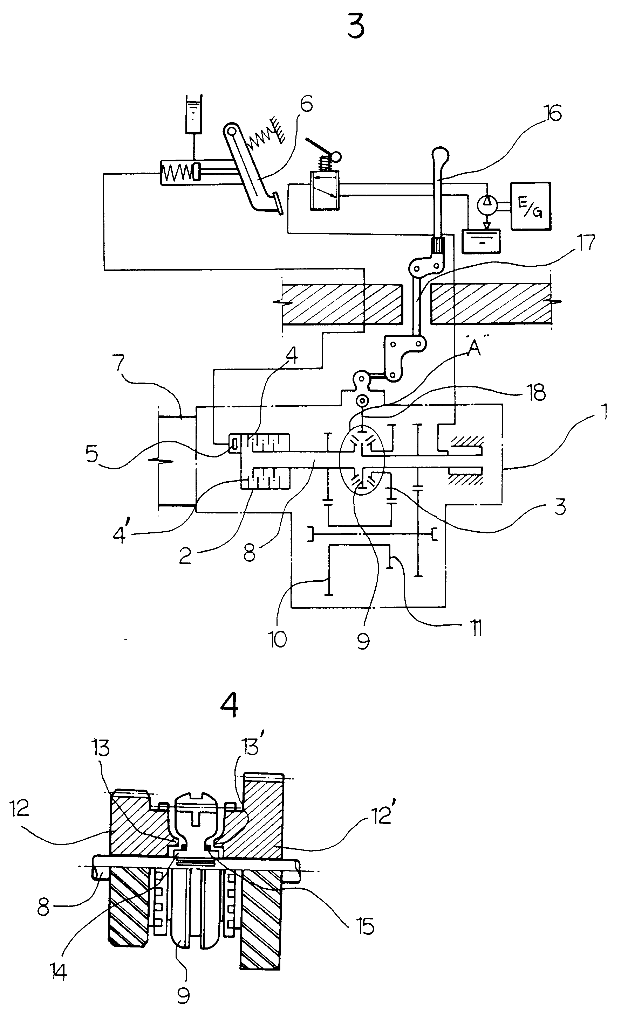

A conventional wheeled excavator equipped with a speed change gear device 101 of a sliding gear type is shown in Fig. 1 and Fig. 2. The sliding gear type speed change gear device 101 is mounted on a lower frame of the excavator. In this gear device 101, a speed changing operation is carried out by handling a speed change lever 102 and shifting a speed change fork 103 provided in the gear box to a desired speed stage, thus bringing a speed change gear 104 into an engagement with a desired stage gear 105 or 106.

However, the above gear device 101 has a problem in that the speed changing operation of the gear device 101 can he achieved only when the excavator is completely stopped, otherwise the change gear 104 should be engaged with the stage gear 105 or 106 while axially sliding.

That is, when the speed changing operation is made under the condition that the excavator is not completely stopped, the gears 104, 105 and 106 should be engaged with each other under the condition that they are rotated at different circumferential velocities respectively. Accordingly, the gear device 101 may cause noise as well as breakage of gear teeth and, furthermore, seriously damaged. In addition, it is very inconvenient for a driver to stop the excavator completely everytime the speed change is needed.

On account of the above problem, in a vehicle such as an automobile, it is general to use a synchro mesh gear as the speed change gear device. This synchro mesh gear is generally classified into three types, that is, key type, pin type and servo type. However, regardless of its types, the synchro mesh gear carries out the speed changing operation under the same principal theory that the RPM(revolutions per minute) of the change gear and the stage gears are equalized to obtain a smooth speed changing even while running.

The inventor has made a study to develope a device which can carry out the speed changing operation while running, and especially a synchro mesh gear which can be adapted to a wheeled excavator.

### SUMMARY OF THE INVENTION

It is, therefore, an object of the present invention to provide a speed change gear for wheeled excavator which can achieve a desired speed changing operation while the excavator is running, and make the excavator run at the changed speed immediately.

In order to accomplish the above object, the present invention provides a speed change gear device for a wheeled excavator comprising clutching means for stopping a power transmission from a running motor to a driving shaft in accordance with an operation of a clutch pedal, and speed changing means for carrying out speed change in at lease two speed changing stages in accordance with an operation of a speed change lever, wherein said clutching means comprises a plurality of clutch plates and an apply piston, said apply piston making said clutch plates be engaged with or disengaged from each other in accordance with the operation of said clutch pedal, and said speed changing means comprises a synchro mesh gear carrying out the speed change only when the circumferential velocities of said driving shaft and a driven shaft are equalized to each other.

The synchro mesh gear comprises a pair of clutch gears mounted on said driving shaft with a predetermined distace therebetween, a sleeve gear placed between said clutch gears, a pair of synchro cones respectively formed on facing surfaces of said clutch gears, and a synchronizer ring mounted about a hub of said sleeve gear and coming into frictional contact with said synchro cones while a speed changing operation is carried out.

### BRIEF DESCRIPTION OF THE DRAWINGS

The above and other objects, features and advantages of the present invention will be more clearly understood from the following detailed description taken in conjunction with the accompanying drawings, in which:
Fig. 1 is a schematic side view of a wheeled excavator equipped with a conventional speed change gear device of a sliding gear type;
Fig. 2 is a schematic view showing a construction of the speed change gear device of Fig. 1.
Fig. 3 is a view showing a construction of a speed change gear device for a wheeled excavator in accordance with a preferred embodiment of the present invention; and
Fig. 4 is a half sectioned view of the circled section A of Fig. 3.

### DESCRIPTION OF THE PREFERRED EMBODIMENTS

As shown in Fig. 3 and Fig. 4, the speed change gear device in accordance with an embodiment of the present invention includes a power interruption clutch 2 and a synchro mesh gear 3 in a gear box 1.

The power interruption clutch 2 has a plurality of clutch plates 4 and 4' and an apply piston 5. The clutch plates 4, 4' maintain their engagement with each other by a resilient member(not shown), and they are disengaged from each other when the apply piston 5 is actuated by pressurized hydraulic fluid when a clutch pedal 6 placed on the inner bottom of a control cab of the excavator is stepped on. In other words, when the clutch pedal 6 in the control cab is stepped on, the power transmitted from a running motor 7 to a driving shaft 8 is stopped.

The synchro mesh gear 3 is mounted on the driving shaft 8 and makes a sleeve gear 9, a first stage gear 10 and a second stage gear 11 be equalized to each other in their circumferential velocities when carrying out speed change, thus to allow the speed changing operation to be carried out even while the excavator is running.

As best shown in Fig. 4, the synchro mesh gear 3 comprises a pair of clutch gears 12 and 12' which are mounted on the driving shaft 8 with a predetermined distance therebetween. The sleeve gear 9 is placed between the two clutch gears 12 and 12'. An opposed pair of synchro cones 13 and 13' are respectively formed on facing surfaces of the clutch gears 12 and 12'. In addition, a synchronizer ring 15 is mounted about a hub 14 of the sleeve gear 9 and comes into frictional contact with the synchro cones 13 and 13' when a speed changing operation is carried out.

In a speed changing operation of the above gear device, the clutch pedal 6 in the control cab is stepped on in order to stop the power transmission from the running motor 7 to the gear box 1. Thereafter, a speed change lever 16 placed about a driver seat of the control cab is handled to a desired speed stage. The handling motion of the change lever 16 is transmitted to a speed change spool 18 through a plurality of link members 17, thus to cause the synchro cones 13 and 13' of the two clutch gears 12 and 12' to come into frictional contact with the synchronizer ring 15 of the sleeve gear 9. The frictional contact of the synchro cones 13 and 13' with the synchronizer ring 15 makes the circumferential velocities of the sleeve gear 9, the first stage gear 10 and the second stage gear 11 be equalized to each other. Hence, the sleeve gear 9 can be easily engaged with one of the first and the second stage gears 10 and 11 and makes it possible to obtain a smooth speed changing operation while continuing the running of the excavator.

As described above, the gear device of the present invention not only achieves a desired speed changing operation while continuing the running of the excavator but also makes the excavator run at the changed speed immediately.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A speed change gear device for a wheeled excavator comprising clutching means for stopping a power transmission from a running motor to a driving shaft in accordance with an operation of a clutch pedal, and speed changing means for carrying out speed change in at lease two speed changing stages in accordance with an operation of a speed change lever, wherein
said clutching means comprises a plurality of clutch plates and an apply piston, said apply piston making said clutch plates be engaged with or disengaged from each other in accordance with the operation of said clutch pedal; and
said speed changing means comprises a synchro mesh gear carrying out the speed change only when the circumferential velocities of said driving shaft and a driven shaft are equalized to each other.

2. The speed change gear device according to claim 1, wherein said synchro mesh gear comprises:
a pair of clutch gears mounted on said driving shaft with a predetermined distace therebetween;
a sleeve gear placed between said clutch gears;
a pair of synchro cones respectively formed on facing surfaces of said clutch gears; and
a synchronizer ring mounted about a hub of said sleeve gear and coming into frictional contact with said synchro cones while a speed changing operation is carried out.
